# EUROPÄISCHE PATENTSCHRIFT

(11) **EP 3 372 552 B1**
(45) Veröffentlichungstag und Bekanntmachung des Hinweises auf die Patenterteilung: **10.06.2020**
(21) Anmeldenummer: 17160297.2
(22) Anmeldetag: 10.03.2017
(51) Int. Cl.: B66D 5/14, B66D 1/28, B66D 1/22, B66D 1/14

(54) **ELEKTROMOTOR MIT INTEGRIERTER HALTEBREMSE**
ELECTRIC MOTOR COMPRISING AN INTEGRATED HOLDING BRAKE
MOTEUR ÉLECTRIQUE COMPRENANT UN FREIN D'ARRÊT INTÉGRÉ

(43) Veröffentlichungstag der Anmeldung: 12.09.2018
(73) Patentinhaber: Zollern GmbH & Co. KG, 72517 Sigmaringen-Laucherthal (DE)
(72) Erfinder: Berger, Peter, 88518 Herbertingen (DE); Reiner, Frank, 88518 Herbertingen (DE)
(74) Vertreter: SSM Sandmair

(56) Entgegenhaltungen:
- EP-A1- 0 652 625
- DE-A1- 2 448 357
- DE-A1- 3 506 338
- GB-A- 965 636
- US-A1- 2013 334 996

## Beschreibung

Die Erfindung betrifft einen Elektromotor mit einer integrierten Bremse, insbesondere Betriebs- und/oder Haltebremse, für eine Winde. Somit betrifft die Erfindung eine Motor-Bremse-Einheit, die einen Elektromotor und eine Bremse umfasst. Die Motor-Bremse-Einheit ist so gestaltet, dass sie an einer Winde befestigt werden kann. Bei der Winde kann es sich beispielsweise um eine Zugmittel- oder Seilwinde handeln. In einer Weiterbildung betrifft die Erfindung die Winde, die die Motor-Bremse-Einheit aufweist.

Aus der EP 3 028 983 A1 ist eine Seilwinde bekannt, an der ein Antriebsmotor angebracht ist, der eine Motorwelle aufweist, die verdrehfest mit einer Getriebewelle verbunden ist, wodurch eine Drehung der Antriebswelle des Antriebsmotors eine Drehung der Getriebewelle bewirkt. Die Getriebewelle ist mittels mehrerer Planetenstufen kinematisch mit einer Seiltrommel verbunden, so dass die Drehung der Getriebewelle eine über- oder untersetzte Drehung der Seiltrommel relativ zu einem Windengestell um die Drehachse bewirkt. Auf der Getriebewelle sitzt eine Haltebremse, die so ausgestaltet ist, dass sie in ihrem geschlossenen Zustand eine Drehung der Getriebewelle relativ zu dem Windengestell verhindert. Dadurch, dass die Bremse auf der Getriebewelle und zwischen dem Getriebe und dem Antriebsmotor sitzt, ist ein Auswechseln der Bremse verhältnismäßig montageaufwändig und wird verhältnismäßig viel Platz auf der Seite des Windengestells, an der sich der Motor und die Bremse befinden, benötigt.

Die DE 24 48 357 A1 offenbart ein Reduziergetriebe für Antriebe von Hebezeugen, wie Seil- oder Kettenzüge, Fahr- oder Drehwerke, mit einer motorgetriebenen Antriebswelle. Das Reduziergetriebe umfasst ferner eine Motorbremse. Die DE 24 48 357 A1 offenbart den Oberbegriff des unabhängigen Anspruchs 1.

Die EP 0 652 625 A1 offenbart einen elektrischen Antrieb mit einer Bremse, insbesondere für Hebezeuge, Hubeinrichtungen oder positionierende Förderanlagen.

Die DE 35 06 338 A1 beschreibt eine Hebevorrichtung zur Verwendung im Hochbau mit einem Elektromotor und einer an einem Ende der Welle des Elektromotors montierten Bremse.

Die US 2013/334996 A1 offenbart eine drehzahlvariable Fördermaschine.

Die GB 965 636 A beschreibt eine Hebevorrichtung mit einem Elektromotor und einer Bremse, die von dem Stator des Elektromotors umgeben ist.

Der Erfindung liegt die Aufgabe zugrunde, eine Motor-Bremse-Einheit bereitzustellen, welche platzsparend und wartungsfreundlich ist. Die Aufgabe wird mit den Merkmalen des Anspruchs 1 gelöst. Vorteilhafte Weiterentwicklungen ergeben sich aus den abhängigen Ansprüchen, der Beschreibung und den Figuren.

Die Erfindung geht von einer Motor-Bremse-Einheit mit einem Elektromotor und einer Bremse aus. Der Elektromotor und die Bremse können jeweils eine Baugruppe bilden, die zusammengefügt werden können und somit eine Motor-Bremse-Einheit bilden. Wenngleich der Elektromotor und die Bremse zeitlich hintereinander an einer Winde, insbesondere dem Windengestell und der Eingangswelle des Windengetriebes befestigt werden können, wobei bevorzugt ist, dass zuerst der Elektromotor und dann die Bremse daran befestigt wird, kann die aus Elektromotor und Bremse gebildete Einheit in einem Schritt an der Winde befestigt werden.

Der Elektromotor umfasst einen mit einer Motorwelle um deren Drehachse drehfest verbundenen Rotor und einen mit dem Gehäuse verbundenen Stator, wobei der Rotor mit der Motorwelle relativ zu dem Stator um die Drehachse drehbar ist. Der Rotor kann beispielsweise mittels eines Rotorträgers um die Drehachse verdrehfest mit der Motorwelle verbunden sein. Der Rotorträger kann beispielsweise mit der Motorwelle eine Welle-Nabe-Verbindung bilden, welche bewirkt, dass der Rotorträger um die Drehachse verdrehfest mit der Motorwelle gefügt ist. Der Rotorträger kann um die Drehachse verdrehfest mit dem Rotor verbunden oder gefügt sein, beispielsweise mittels mehrerer Schraubenbolzen.

Der Rotor kann beispielsweise eine oder mehrere Permanentmagnete und/oder eine oder mehrere Wicklungen zur Erzeugung eines Magnetfelds aufweisen.

Der Stator kann einen oder mehrere Permanentmagnete und/oder eine oder mehrere Wicklungen zur Erzeugung eines Magnetfelds aufweisen. Der mit dem Motorgehäuse verbundene oder an dem Motorgehäuse befestigte Stator und der Rotor sind zueinander so angeordnet, dass sich deren Magnetfelder beeinflussen, wodurch der Rotor um die Drehachse in Drehung versetzt werden kann.

Der Elektromotor kann beispielsweise als Innenläufermotor ausgestaltet sein, d. h., dass der Rotor zwischen Stator und Drehachse angeordnet ist. Alternativ kann der Elektromotor als Außenläufermotor ausgestaltet sein, d. h., dass der Stator zwischen Rotor und Drehachse angeordnet ist.

Der Elektromotor kann vorzugsweise als Synchronmotor (Synchronmaschine) ausgebildet sein, d. h., dass der Rotor synchron mit dem Drehfeld des Stators läuft. Alternativ kann der Elektromotor als Asynchronmotor (Asynchronmaschine) ausgebildet sein, d. h., dass der Rotor dem Drehfeld des Stators nachläuft.

Die Bremse, die beispielsweise eine Lamellenbremse sein kann, weist mindestens einen ersten Bremskörper und mindestens einen zweiten Bremskörper, der mit der Motorwelle um die Drehachse verdrehfest verbunden oder verbindbar ist, auf. Der mindestens eine erste Bremskörper und der mindestens eine zweite Bremskörper sind zur Erzielung einer auf Reibschluss basierenden Bremswirkung gegeneinander drückbar. Beispielsweise können mehrere erste Lamellen den mindestens einen ersten Bremskörper und mehrere zweite Lamellen den mindestens einen zweiten Bremskörper bilden. Der mindestens eine erste Bremskörper und der mindestens eine zweite Bremskörper sind zur Erzielung einer auf Reibschluss basierenden Bremswirkung gegeneinander drückbar, insbesondere mittels eines Druckstücks der Bremse. Der mindestens eine erste Bremskörper kann beispielsweise drehfest oder permanent drehfest mit dem Bremsgehäuse oder/und dem Motorgehäuse verbunden sein, insbesondere unmittelbar oder mittelbar, d. h. über weitere Bauteile. Der mindestens eine zweite Bremskörper kann unmittelbar oder mittelbar, d. h. über weitere Bauteile, beispielsweise über einen Bremsrotor, mit der Motorwelle drehfest, insbesondere permanent drehfest verbunden sein. Der Bremsrotor kann beispielsweise mit der Motorwelle eine, insbesondere formschlüssige, Welle-Nabe-Verbindung bilden.

Wenn die Motorwelle gedreht wird, insbesondere relativ zu dem Motorgehäuse gedreht wird, kann sich der mindestens eine zweite Bremskörper relativ zu dem mindestens einen ersten Bremskörper und/oder relativ zu dem Motorgehäuse oder dem Bremsengehäuse drehen.

Das Motorgehäuse kann insbesondere mehrteilig gebildet sein. Beispielsweise kann das Motorgehäuse mindestens eine Umfangswand aufweisen, welche sich um die Drehachse erstreckt und den Rotor und den Stator umfangsseitig umgibt. Beispielsweise kann der Stator an der mindestens einen Umfangswand befestigt sein. Beispielsweise kann die Umfangswand im Wesentlichen zylindrisch sein. Die mindestens eine Umfangswand kann auf einer ersten Seite mittels einer ersten Stirnwand, die insbesondere von einem Gehäusedeckel gebildet werden kann, und auf der zweiten, der ersten Seite entgegengesetzten Seite mittels einer zweiten Stirnwand, die insbesondere von einem zweiten Gehäusedeckel gebildet werden kann, begrenzt oder abgeschlossen sein. Die mindestens eine Umfangswand und eine der Stirnwände können einteilig gebildet sein, während die andere Stirnwand ein separat mit der mindestens einen Umfangswand gefügtes Bauteil (Gehäusedeckel) sein kann. Alternativ können beide Stirnwände separat mit der mindestens einen Umfangswand gefügte Bauteile (Gehäusedeckel) sein.

Zwischen der ersten Stirnwand und der zweiten Stirnwand können der Rotor und der Stator angeordnet sein. Insbesondere kann das Motorgehäuse einen Motorraum einfassen, in dem der Rotor und der Stator angeordnet sind und vorzugsweise auch ein Abschnitt der Motorwelle.

Das Gehäuse, insbesondere der erste Gehäusedeckel oder zweite Gehäusedeckel kann einen topfförmigen Abschnitt aufweisen. Der topfförmige Abschnitt fasst einen Aufnahmeraum ein und bildet bevorzugt die Wände des Aufnahmeraums. Der topfförmige Abschnitt ist vorzugsweise zur zweiten Seite hin offen und wird zur ersten Seite hin von einem Boden begrenzt. Der Boden und die erste Stirnwand können über eine sich um die Drehachse, insbesondere konzentrisch, erstreckende Seitenwand verbunden sein. Die Seitenwand kann beispielsweise zylindrisch sein. Die Seitenwand kann den Aufnahmeraum für die Bremse umfangsseitig umgeben. Der Aufnahmeraum kann zur ersten Seite hin mittels des Bodens begrenzt oder verschlossen sein, wobei er zur zweiten Seite hin vorzugsweise offen ist. Die Öffnung kann beispielsweise einen Durchmesser aufweisen, der größer-gleich als der Innendurchmesser der Seitenwand ist. Der topfförmige Abschnitt trennt den Motorraum, insbesondere mediendicht, von dem Aufnahmeraum für die Bremse. Dadurch, dass der topfförmige Abschnitt vorgesehen ist, kann die Bremse in den von ihm gebildeten Aufnahmeraum eingesetzt werden, ohne dabei den Motor zerlegen oder von der Winde entfernen zu müssen. Wenn die Bremse in den Aufnahmeraum eingesetzt ist, wird sie zumindest teilweise oder vollständig von dem topfförmigen Abschnitt umgeben. Bevorzugt wird zumindest der größte Teil der Bremse von dem topfförmigen Abschnitt, insbesondere von der Seitenwand, umgeben bzw. ist der größte Teil der Bremse in dem Aufnahmeraum angeordnet. Hierdurch lässt sich die Bremse auf eine einfache Weise an den Motor zur Bildung der Motor-Bremse-Einheit anbringen und, wenn gewünscht, von dem Motor entfernen. Durch den topfförmigen Abschnitt kann die Bremse platzsparend am Motor befestigt werden, da er zumindest teilweise in dem vom topfförmigen Abschnitt gebildeten Aufnahmeraum angeordnet ist, wodurch die Baulänge der Motor-Bremse-Einheit entlang der Drehachse verringert werden kann.

Erfindungsgemäß ist der topfförmige Abschnitt, insbesondere der Boden und/oder die Seitenwand oder zumindest ein Teil der Seitenwand von dem Rotor des Elektromotors umgeben. Hierdurch ergibt sich der Vorteil einer besonders kompakten Bauweise, da sich der Aufnahmeraum weit in den Elektromotor erstreckt und die Bremse weit in den Elektromotor eingeschoben werden kann.

Insbesondere können der mindestens eine erste Bremskörper und/oder der mindestens eine zweite Bremskörper von dem Rotor und/oder dem Stator umgeben sein. Dadurch wird neben einer besonders kompakten Bauweise auch erreicht, dass der Abstand, mit dem das Bremsmoment der Bremse in die Motorwelle geleitet wird, zu der Stelle, an der das Antriebsmoment des Rotors in die Motorwelle geleitet wird, gering gehalten werden kann, wodurch die Gesamtlänge der Motorwelle verringert und die elastische Torsionsverformung der Motorwelle ebenfalls gering gehalten werden kann.

Das Motorgehäuse kann eine erste Stirnwand und eine zweite Stirnwand aufweisen, zwischen denen der Rotor und der Stator angeordnet sind, wobei sich der topfförmige Abschnitt von der zweiten Stirnwand zur ersten Stirnwand hin erstreckt. Je weiter sich der topfförmige Abschnitt von der zweiten Stirnwand zur ersten Stirnwand hin erstreckt, desto kompakter kann die Motor-Bremse-Einheit sein, da die Bremse entsprechend tief in den Aufnahmeraum des topfförmigen Abschnitts eingeschoben werden kann.

Der Boden, der insbesondere den Aufnahmeraum stirnseitig begrenzt, kann in Bezug auf die zweite Stirnwand zur ersten Stirnwand hin versetzt sein. Insbesondere kann der Boden so weit zur ersten Stirnwand hin versetzt sein, dass er von dem Rotor und/oder dem Stator umfangsseitig umgeben wird. Hierdurch lässt sich eine besonders kompakte Bauweise erzielen.

Die Motorwelle kann sich durch den Boden in den topfförmigen Abschnitt erstrecken. Der Boden kann hierzu eine Öffnung aufweisen, durch den sich die Motorwelle in den Aufnahmeraum erstreckt. Der in dem Aufnahmeraum angeordnete Abschnitt der Motorwelle kann mit dem Bremsrotor die insbesondere formschlüssige Welle-Nabe-Verbindung bilden.

Beispielsweise kann der Rotorträger, über den der Rotor verdrehfest um die Drehachse mit der Motorwelle verbunden ist, zwischen dem Boden und der ersten Stirnwand angeordnet sein. Alternativ oder zusätzlich kann der Rotor von dem Rotorträger einseitig abragen, insbesondere zur zweiten Stirnwand hin abragen. Dadurch kann einerseits erreicht werden, dass der Rotor mit der Motorwelle um die Drehachse verdrehfest verbunden werden kann und andererseits der Boden des topfförmigen Abschnitts in Bezug auf die zweite Stirnwand möglichst weit zur ersten Stirnwand hin verschoben werden kann. Hierdurch kann die Motor-Bremse-Einheit entlang der Drehachse verhältnismäßig kurz gestaltet werden.

In bevorzugten Ausführungen kann die Bremse den oben genannten Bremsrotor aufweisen, an dem der mindestens eine zweite Bremskörper befestigt ist und der mittels einer, insbesondere formschlüssigen, Welle-Nabe-Verbindung mit der Antriebswelle um die Drehachse verdrehfest verbunden ist. Dadurch lässt sich der Bremsrotor zur Herstellung der Welle-Nabe-Verbindung auf die Motorwelle axial aufschieben, wenn die Bremse oder der Bremsrotor über die Öffnung in den Aufnahmeraum eingeschoben wird.

Die Motorwelle kann sich über ein erstes Drehlager und ein zweites Drehlager jeweils an dem Motorgehäuse abstützen. Das erste Drehlager und das zweite Drehlager können beispielsweise Wälzlager sein. Insbesondere kann sich die Motorwelle über das erste Drehlager drehbar an dem Boden abstützen und über das zweite Drehlager drehbar an der ersten Stirnwand, dem ersten Gehäusedeckel oder an einem an der ersten Stirnwand oder dem ersten Gehäusedeckel befestigten Lagergehäuse abstützen. Da das Lagergehäuse vorzugsweise an der ersten Stirnwand oder dem ersten Gehäusedeckel befestigt ist, kann sich die Motorwelle über das zweite Drehlager mittelbar über das Lagergehäuse an der ersten Stirnwand oder dem ersten Gehäusedeckel abstützten. Beispielsweise ist der Rotor oder der Rotorträger zwischen dem ersten und zweiten Drehlager an der Motorwelle befestigt. Alternativ oder zusätzlich kann das erste Drehlager zwischen der Stelle, an der der Bremsrotor an der Motorwelle befestigt ist (Welle-Nabe-Verbindung), und dem zweiten Wälzlager angeordnet sein.

Somit kann der in dem Aufnahmeraum für die Bremse angeordnete Abschnitt der Motorwelle fliegend gelagert sein, wobei der in dem Motorraum angeordnete Abschnitt der Motorwelle beidseitig gelagert sein kann. Während die beidseitige Lagerung besonders stabil ist, hat die fliegende Lagerung in dem Aufnahmeraum den Vorteil, dass die Bremse oder der Bremsrotor beim Einsetzen in den Aufnahmeraum entlang der Drehachse auf die Motorwelle geschoben und die drehfeste Verbindung zwischen dem Bremsrotor und der Motorwelle hergestellt werden kann.

Der mindestens eine erste Bremskörper und mindestens eine zweite Bremskörper können beispielsweise elektrisch, hydraulisch oder pneumatisch gegeneinander gedrückt werden, um die auf Reibschluss basierende Bremswirkung zu erhöhen. Das heißt, dass die Bremskörper durch elektrische, hydraulische oder pneumatische Betätigung gegeneinander gedrückt werden, wodurch die Bremse betätigt oder geschlossen wird (erfolgt keine Betätigung, ist die Bremse geöffnet).

In bevorzugten Ausführungen kann die Bremse allerdings mindestens eine vorgespannte Feder aufweisen, wie z. B. mehrere vorgespannte Federn, wobei die mindestens eine vorgespannte Feder über ein Druckstück die mindestens einen ersten und zweiten Bremskörper für die Bremsung gegeneinander drückt. Somit wird das maximale Bremsmoment der Bremse durch die mindestens eine vorgespannte Feder bestimmt, welche die Bremskörper gegeneinander drückt. Das Druckstück kann zum Lösen der ersten Bremse oder zur Verringerung des Bremsmoments gegen die Kraft der vorgespannten Federn elektrisch, hydraulisch oder pneumatisch bewegt werden (erfolgt keine Betätigung, ist die Bremse geschlossen). Dadurch ist sichergestellt, wenn das Mittel zum Bewegen des Druckstücks gegen die Kraft der vorgespannten Feder ausfällt, dass die mindestens eine vorgespannte Feder über das Druckstück die ersten und zweiten Bremskörper zur Erzeugung des maximalen Bremsmoments gegeneinander drückt. Hierdurch wird eine Sicherheitseinrichtung bereitgestellt, welche sicherstellt, dass die Bremse beim Ausfall des Mittels zum Bewegen bremst. Das Druckstück der Bremse kann beispielsweise eine verschiebbare Wand einer Druckkammer bilden, welche pneumatisch oder hydraulisch bedruckbar ist, um das Druckstück gegen die Kraft der mindestens einen Feder zu verschieben, d. h. das Druckstück so zu verschieben, dass die mindestens eine Feder gespannt wird. Beim Entlüften der Druckkammer kann die Feder das Druckstück verschieben und gegen die Bremskörper drücken.

Die Motor-Bremse-Einheit kann einen Schmiermittelkanal aufweisen, der einen von außen zugänglichen Schmiermittelanschluss, insbesondere Schmiernippel, und das erste Drehlager schmiermittelkommunizierend miteinander verbindet. Hierdurch kann das Drehlager über den Schmiermittel und den Schmiermittelkanal mit entsprechendem Schmiernippel, insbesondere Schmierfett, von Zeit zu Zeit abgeschmiert werden. Ein erster Kanalabschnitt kann sich beispielsweise durch die Wand des Bremsgehäuses erstrecken. Ein zweiter Kanalabschnitt kann sich beispielsweise durch die Wand des Bodens erstrecken. Beispielsweise kann der Kanalabschnitt zwischen dem Schmiermittelanschluss und dem Boden von einem Schlauch oder einem Rohr gebildet sein. Das Rohr kann z. B. in eine in den Schmiermittelkanalabschnitt des Bodens mündende Bohrung gesteckt sein. Vorteilhaft lässt sich das Rohr in die Bohrung des Bodens einstecken, wenn die Bremse oder einzelne Komponenten davon in den Aufnahmeraum eingeschoben wird.

Aufgrund der kompakten Bauweise der Motor-Bremse-Einheit kann es unter Umständen zu einer starken Wärmeentwicklung kommen, die beispielsweise durch die Oberfläche des Motorgehäuses und/oder des Bremsengehäuses abgeführt werden kann. Hierfür kann das Motorgehäuse beispielsweise Kühlrippen an seiner Außenseite aufweisen. In bevorzugten Ausführungen kann die Motor-Bremse-Einheit einen Kühlmittelzuführanschluss und einen Kühlmittelabführanschluss aufweisen, wobei über den Kühlmittelzuführanschluss der Motor-Bremse-Einheit Kühlmittel zugeführt und über den Kühlmittelabführanschluss Kühlmittel aus der Motor-Bremse-Einheit abgeführt werden kann. Beispielsweise können der Kühlmittelzuführanschluss und der Kühlmittelabführanschluss über mindestens einen Kühlmittelkanal der Motor-Bremse-Einheit verbunden sein, so dass das über den Kühlmittelzuführanschluss zugeführte Kühlmittel sich auf dem Weg zum Kühlmittelabführanschluss aufheizt und somit Wärme aus der Motor-Bremse-Einheit abführt. Beispielsweise kann der mindestens eine Kühlmittelkanal von dem Motorgehäuse gebildet werden. Beispielsweise kann das Motorgehäuse eine erste sich um die Drehachse erstreckende Umfangswand und eine zweite sich um die Drehachse erstreckende Umfangswand, welche die erste Umfangswand umgibt, aufweisen. Zwischen der ersten Umfangswand und der zweiten Umfangswand kann ein sich über den Umfang ersteckender Kanal gebildet sein. Der Kanal kann sich beispielsweise von dem Kühlmittelzuführanschluss mehrfach und/oder wendelförmig über den Umfang des Motorgehäuses insbesondere bis zum Kühlmittelabführanschluss erstrecken. Hierdurch kann Kühlmittel von dem Kühlmittelzuführanschluss über den Umfang, insbesondere über den sich wendelförmig über den Umfang des Elektromotors erstreckende Kühlmittelkanal zu dem Kühlmittelabführanschluss geleitet werden.

In bevorzugten Ausführungen kann eine Winde die Motor-Bremse-Einheit aufweisen. Die Winde, die insbesondere als Zugmittelwinde oder Seilwinde ausgestaltet sein kann, kann ein Windengestell und eine relativ zu dem Windengestell um eine Drehachse drehbare Windentrommel aufweisen. Die Windentrommel kann zwischen zwei Wänden des Windengestells beidseitig um die Drehachse drehbar gelagert angeordnet sein. Das Gehäuse des Elektromotors (Motorgehäuse) kann um die Drehachse verdrehfest mit dem Windengestell, insbesondere mit einer Wand des Windengestells verbunden sein. Vorzugsweise kann das Motorgehäuse auf einer Seite der Wand angeordnet sein, wobei die Windentrommel auf der anderen Seite der Wand bzw. zwischen den beiden Wänden des Windengestells angeordnet ist. Die Motorwelle des Elektromotors oder der Motor-Bremse-Einheit kann über ein Getriebe kinematisch so mit der Windentrommel verbunden sein, dass eine Drehung der Motorwelle eine Drehung der Windentrommel relativ zu dem Windengestell um die Drehachse bewirkt, vorzugsweise unter Änderung, insbesondere Verringerung der Drehzahl, und/oder unter Änderung der Drehrichtung oder unter Beibehaltung der Drehrichtung. Die Bremse kann die Drehung der Motorwelle und somit auch die Drehung der Windentrommel abbremsen oder verhindern, wenn die ersten und zweiten Bremskörper gegeneinander gedrückt werden.

Das Getriebe kann ein mit dem Windengestell um die Drehachse verdrehfest verbundenes erstes Gehäuse, eine mit der Motorwelle um die Drehachse drehfest verbundene Eingangswelle, die relativ zu dem ersten Gehäuse um die Drehachse drehbar ist, und ein zweites Gehäuse, das relativ zu dem ersten Gehäuse um die Drehachse drehbar an dem ersten Gehäuse gelagert ist, aufweisen. Das zweite Gehäuse ist vorzugsweise um die Drehachse verdrehfest mit der Windentrommel verbunden. Vorzugsweise kann sich das zweite Gehäuse an dem ersten Gehäuse über mindestens ein Drehlager, vorzugsweise über zwei Drehlager an dem ersten Gehäuse um die Drehachse drehbar abstützen. Das erste Gehäuse und das zweite Gehäuse können einen Aufnahmeraum einfassen, in dem sich beispielsweise Schmiermittel und einzelne Komponenten des Getriebes befinden können. Beispielsweise kann kinematisch zwischen der Eingangswelle und dem zweiten Gehäuse des Getriebes mindestens eine Planetenstufe, wie z. B. eine einzige, zwei, drei, oder noch mehr Planetenstufen, angeordnet sein.

Beispielsweise können die Motorwelle und die Eingangswelle mittels einer, insbesondere formschlüssigen, Welle-Nabe-Verbindung verbunden sein oder werden, um die Drehung der Motorwelle auf die Eingangswelle zu übertragen. Hierfür kann die Motorwelle eine Eingriffsstruktur aufweisen, die mit einer Eingriffsgegenstruktur der Eingangswelle die Welle-Nabe-Verbindung bildet. Hierdurch kann der Motor auf eine einfache Weise an dem Windengestell befestigt und die Motorwelle mit der Eingangswelle verbunden werden.

Die Erfindung wurde anhand mehrerer Beispiele und Ausführungen beschrieben. Im Folgenden wird eine besonders bevorzugte Ausführung der Erfindung anhand von Figuren beschrieben. Die dabei offenbarten Merkmale bilden je einzeln und in jeglicher Merkmalskombination den Gegenstand der Erfindung vorteilhaft weiter. Es zeigen:
- Figur 1: eine erfindungsgemäße Winde und
- Figur 2: eine Motor-Bremse-Einheit der Winde aus Figur 1.

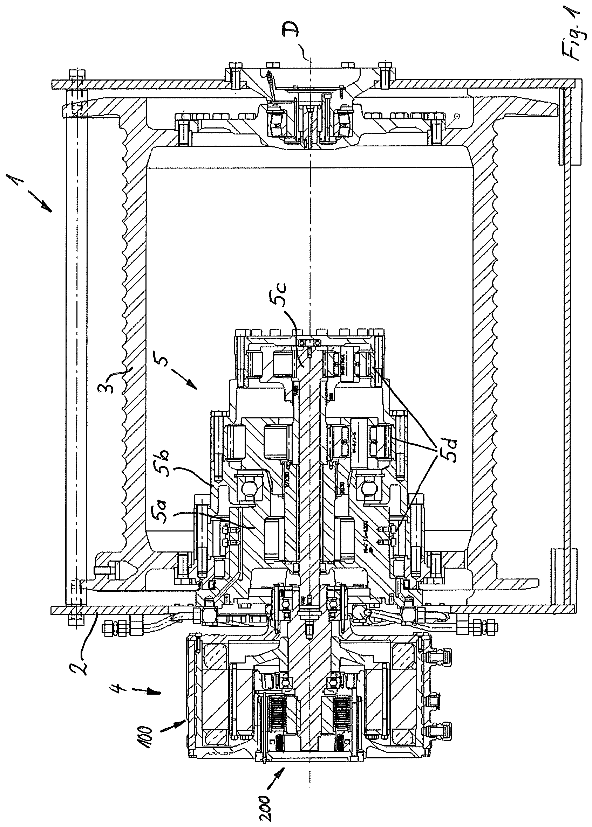

Figur 1 zeigt eine Winde 1, die ein Windengestell 2 mit zwei Wänden aufweist, wobei eine Windentrommel 3 beidseitig unmittelbar oder mittelbar an den Wänden mittels Drehlagern, insbesondere Wälzlagern, abgestützt und relativ zu dem Windengestell 2 um die Drehachse D drehbar ist.

Die Winde 1 weist ein Getriebe 5 auf, welches ein erstes Getriebegehäuse 5a und ein zweites Getriebegehäuse 5b aufweist, wobei sich das zweite Getriebegehäuse 5b über zwei Drehlager, nämlich Wälzlager an dem ersten Getriebegehäuse 5a um die Drehachse D drehbar abstützt. Das erste Getriebegehäuse 5a ist um die Drehachse D verdrehfest mit der Wand des Windengestells 2 verbunden, insbesondere mittels mehrerer Schraubenbolzen. Das zweite Getriebegehäuse 5b ist insbesondere mittels mehrerer Schraubenbolzen um die Drehachse D verdrehfest mit der Windentrommel 3 verbunden. Das Getriebe 5 ist stirnseitig in die Windentrommel 3 eingeschoben und wird somit auch als Einschubgetriebe bezeichnet. Das Getriebe 5 weist eine Eingangswelle 5c auf, die um die Drehachse D drehbar gelagert ist. Die Eingangswelle 5c des Getriebes 5 ist über drei Planetenstufen 5d kinematisch so mit dem zweiten Gehäuse 5b verbunden, dass eine Drehung der Eingangswelle 5c relativ zu dem ersten Gehäuse 5a eine drehzahlverringerte Drehung des zweiten Gehäuses 5b relativ zu dem ersten Gehäuse 5a um die Drehachse D und somit auch der Windentrommel 3 bewirkt.

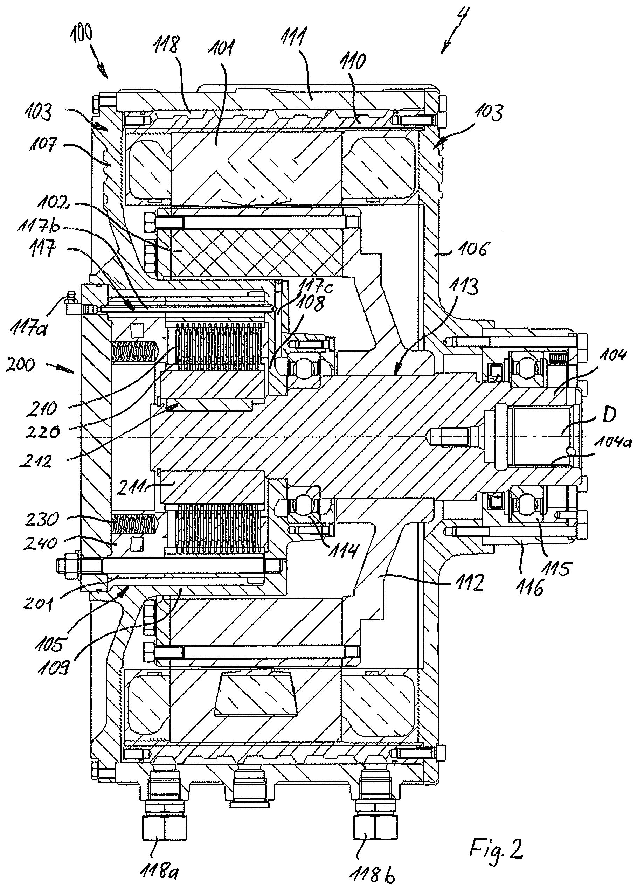

An der Wand des Windengestells 2, an der das erste Gehäuse 5a des Getriebes 5 befestigt ist, ist auf der entgegengesetzten Seite eine Motor-Bremse-Einheit 4 angeordnet, die einen Elektromotor 100 und eine Bremse 200 aufweist. Die Motor-Bremse-Einheit 4 wird im Detail in Figur 2 gezeigt. Der Elektromotor 100 weist ein mehrteiliges Motorgehäuse 103 auf. Das Motorgehäuse 103 weist eine erste trommelförmige Umfangswand 110 und eine konzentrisch dazu angeordnete zweite trommelförmige Umfangswand 111 auf. Die zweite Umfangswand 111 umgibt die erste Umfangswand 110 umfangsseitig. Die Umfangswände 110, 111 erstrecken sich konzentrisch um die Drehachse D. Zwischen der ersten Umfangswand 110 und der zweiten Umfangswand 111 ist ein sich wendelförmig um die Drehachse D erstreckender Kühlmittelkanal 118 gebildet. Der Kühlmittelkanal 118 erstreckt sich von einem Kühlmittelzuführanschluss 118a, der an der zweiten Umfangswand 111 angeordnet ist, wendelförmig um die Drehachse D bis zu einem Kühlmittelabführanschluss 118b der an der zweiten Umfangswand 111 angeordnet ist. Der Außenumfang der ersten Umfangswand 110 weist mindestens eine wendelförmig um die Drehachse D umlaufende Abragung auf, die an dem Innenumfang der zweiten Umfangswand 111 anliegt und dadurch den wendelförmigen Kanal 118 bildet. Der Kanal 118 dient zur Leitung eines Kühlmittels zur Kühlung des Elektromotors 100, insbesondere des Stators 101, der insbesondere thermisch leitend mit der ersten Umfangswand 110 verbunden, insbesondere an dem Innenumfang der ersten Umfangswand 110 angeordnet ist.

An einer ersten Stirnseite der Umfangswände 110, 111 wird der von der Umfangswand 110 eingefasste Motorraum zur Windentrommel 3 oder zum Getriebe 5 hin von einer ersten Stirnwand 106, die von einem ersten Gehäusedeckel gebildet wird, begrenzt oder verschlossen. Der erste Gehäusedeckel weist einen Verbindungsflansch auf, der an dem Windengestell 2 angeflanscht werden kann oder angeflanscht ist, insbesondere mit Hilfe von mehreren Schraubenbolzen. Zur Erhöhung der Stabilität des ersten Gehäusedeckels weist dieser mehrere Verstärkungsrippen zum Verbindungsflansch hin auf. Der erste Gehäusedeckel ist mittels mehrerer Schraubenbolzen mit der ersten Umfangswand 110 und der zweiten Umfangswand 111 gefügt.

Die der ersten Stirnwand 106 entgegengesetzte Stirnseite der Umfangswände 110, 111 ist mittels einer zweiten Stirnwand 107, die von einem zweiten Gehäusedeckel gebildet wird, begrenzt oder verschlossen. Der zweite Gehäusedeckel ist mittels mehrerer Schraubenbolzen mit der ersten Umfangswand 110 und der zweiten Umfangswand 111 gefügt. Der zweite Gehäusedeckel weist einen topfförmigen Abschnitt 105, der eine im Wesentlichen zylindrische oder trommelförmige Seitenwand 109, welche sich konzentrisch um die Drehachse D erstreckt, und einen Boden 108, der in Bezug auf die zweite Stirnwand 107 entlang der Drehachse D zu der ersten Stirnwand 106 hin versetzt angeordnet ist, auf. Die Seitenwand 109 fasst umfangsseitig einen Aufnahmeraum ein, der zur ersten Seite hin von dem Boden 108 stirnseitig begrenzt wird und der zur zweiten Seite hin offen ist. Dadurch kann die Bremse 200 als Einheit oder einzelne Komponenten davon über die Öffnung entlang der Drehachse D in den Aufnahmeraum eingeschoben werden.

Die Bremse 200 weist ein mehrteiliges Bremsgehäuse 201 auf, welches eine Umfangswand und einen die Bremse 200 zur zweiten Seite hin verschließenden Deckel aufweist. Die Bremse 200 oder das Bremsgehäuse 201 ist vollständig oder zumindest zum größten Teil in dem vom topfförmigen Abschnitt 105 umgebenen Aufnahmeraum angeordnet, wenn die Bremse 200 in den Aufnahmeraum eingesetzt ist. Die Bremse 200 ist mittels mehrerer Schraubenbolzen, die sich parallel zu und beabstandet von der Drehachse D erstrecken an dem Elektromotor 100 befestigt. Die Schraubenbolzen können sich durch die ringförmige Wand des Bremsgehäuses 201 erstrecken. Die Schraubenbolzen können in den Boden 108 eingeschraubt sein, wobei die Bremse 200 zwischen dem Boden 108 und einem Schraubenkopf des als Bolzenschraube ausgestalteten Schraubenbolzens oder einer Mutter des als Gewindebolzen ausgestalteten Schraubenbolzens eingeklemmt sein, um die Bremse 200 an dem Elektromotor 100 zu fixieren. Optional könnte noch eine zusätzliche Bremse vorgesehen sein, die außerhalb des Motors 200 angeordnet ist und deren Bremsgehäuse um die Drehachse verdrehfest mit dem Motorgehäuse 103, dem Windengestell 2, dem ersten Gehäuse 5a oder dem Bremsgehäuse 201 verbunden ist. Die zusätzliche Bremse kann so mit der Eingangswelle 5c, der Motorwelle 104 oder einer um die Drehachse D verdrehfest mit der Motorwelle 104 verbundenen Welle verbunden sein, dass sie die Drehung der Eingangswelle 5c abbremsen oder verhindern kann. Bevorzugt kann die zusätzliche Bremse auf der zweiten Seite des Motors 100 angeordnet sein.

Die Bremse 200 weist einen Bremsrotor 211 auf, der mittels einer Welle-Nabe-Verbindung, hier einer Keilverbindung, auf der Motorwelle 104 um die Drehachse D verdrehfest sitzt und auf die Motorwelle 104 mit einer Bewegung entlang der Drehachse D aufgeschoben wurde. Die Bremse 200 weist mehrere erste Lamellen 210 (erste Bremskörper) auf, welche um die Drehachse D drehfest mit dem Bremsgehäuse 201 verbunden sind. Die Bremse 200 weist mehrere zweite Lamellen 120 (zweite Bremskörper) auf, die um die Drehachse D drehfest mit dem Bremsrotor 211 verbunden sind. Zwischen zwei ersten Lamellen 210 ist jeweils eine zweite Lamelle 220 angeordnet, wobei zwischen zwei zweiten Lamellen 220 jeweils eine erste Lamelle 210 angeordnet ist. Mit anderen Worten sind entlang der Drehachse D abwechselnd erste und zweite Lamellen 210, 220 angeordnet. Die ersten und zweiten Lamellen 210, 220 können über ein Druckstück 240 der Bremse 200 gegeneinander gepresst werden, wodurch die Reibung zwischen den Lamellen 210, 220 und somit das Bremsmoment der Bremse 200 erzeugt oder erhöht werden kann. Das Druckstück 240 wird mittels vorgespannter Federn 230 gegen die Lamellen 210, 220 gepresst. Die Federn 230 stützen sich an dem Deckel des Bremsgehäuses 201 einerseits und an dem Druckstück 240 andererseits ab. Die Federn 230 erzeugen somit die für das Bremsmoment erforderliche Anpresskraft auf die Lamellen 210, 220. Die mindestens eine Feder 230 ist eine Wendelfeder, die als Druckfeder wirkt. Das Druckstück 240 bildet die Wand einer Druckkammer (nicht gezeigt), die über einen Kanal mit einem Fluid, insbesondere Druckluft oder Hydrauliköl bedruckbar ist. Das Bremsgehäuse 201, insbesondere dessen Deckel, weist an seiner Außenseite einen Anschluss zum Anschließen einer Versorgungsleitung für die Druckkammer auf. Durch Zuführen von Fluid in die Kammer kann das Druckstück 240 so verschoben werden, dass einerseits die mindestens eine Feder 230 gespannt und die Lamellen 210, 220 von der Anpresskraft des Druckstücks 240 entlastet werden, so dass das Bremsmoment der Bremse 200 abnimmt. Durch Abführen von Fluid aus der Druckkammer, insbesondere durch Verringerung des Drucks in der Druckkammer kann die mindestens eine Feder 230 das Druckstück 240 zur Erhöhung der Anpresskraft in die Lamellen 210, 220 drücken, wodurch das Bremsmoment der Bremse 200 zunimmt. Durch entsprechende Verschiebung des Druckstücks 240 bzw. Druckbeaufschlagung der Druckkammer mit Fluid kann das Bremsmoment der Bremse 200 nahezu beliebig, d. h. stufenlos eingestellt werden. Eine stufenlose Verstellung des Bremsmoments ist dann von Vorteil, wenn die Bremse 200 als Betriebsbremse verwendet werden soll. Wenn die Bremse 200 als Haltebremse verwendet werden soll, ist eine stufenlose Verstellung des Druckstücks nicht zwingend erforderlich, da die Haltebremse vorzugsweise nur zwischen einem geöffneten und einem geschlossenen Zustand schaltbar sein braucht. In dem geöffneten Zustand ist die Bremse vollständig geöffnet, während im geschlossenen Zustand, die Bremse vollständig geschlossen ist, d. h. die Druckkammer entlüftet ist. Vorzugsweise ist die Bremse 200 als Haltebremse ausgelegt. Optional kann die Bremse 200 eine Betriebsbremse und eine Haltebremse aufweisen, wie z. B. in der EP 3 028 983 A1 gezeigt wird, wobei die Motorwelle 104 die gemeinsame Welle der ersten und zweiten Bremse bilden würde.

Zwischen der ersten Stirnwand 106 und der zweiten Stirnwand 107 sind der Stator 101 und der Rotor 102 des Elektromotors 100 angeordnet. Der Rotor 102 ist über einen Rotorträger 112 um die Drehachse D verdrehfest mit der Motorwelle 104 des Elektromotors 100 verbunden. Der Rotor 102 weist mehrere Permanentmagnete auf. Der Rotorträger 112 ist mittels einer Welle-Nabe-Verbindung 113 um die Drehachse D verdrehfest mit der Motorwelle 104 und mittels mehrerer Schraubenbolzen um die Drehachse D verdrehfest mit dem Rotor 102 gefügt. Der Rotor 102 kann zusammen mit dem Rotorträger 112 und der Motorwelle 104 relativ zu dem Stator 101 um die Drehachse D gedreht werden. Der Rotor 102 ragt von dem Rotorträger 112 einseitig zu der zweiten Stirnwand 107 hin ab. Der Stator 101 und der Rotor 102 sind zumindest teilweise in dem Ringspalt, der zwischen der Umfangswand 110, 111 und der Seitenwand 109 gebildet ist, angeordnet. Der topfförmige Abschnitt 105, insbesondere die Seitenwand 109 und der Boden 108 werden von dem Rotor 102 und dem Stator 101 umgeben. Die Lamellen 210, 220 werden von dem Rotor 102 und dem Stator 101 umgeben. Diese Anordnungen ermöglicht eine besonders kompakte Bauweise der Motor-Bremse-Einheit 4. Der Rotor 102 und die Seitenwand 201 begrenzen einen zwischen ihnen gebildeten Spalt.

Die Motorwelle 104 stützt sich mit einem ersten Drehlager 114 an dem Boden 108 oder dem zweiten Gehäusedeckel um die Drehachse D drehbar ab, und mit einem zweiten Drehlager 115 über ein Lagergehäuse 116, welches dreh- und axialfest mit der ersten Stirnwand 106 bzw. dem ersten Gehäusedeckel gefügt ist, an der ersten Stirnwand 106 oder dem ersten Gehäusedeckel um die Drehachse D drehbar ab. Das erste Drehlager 114 wird von dem Rotor 102 und/oder dem Stator 101 umgeben. Die Welle-Nabe-Verbindung 113, mit der der Rotorträger 112 mit der Motorwelle 104 gefügt ist, ist zwischen dem ersten Drehlager 114 und dem zweiten Drehlager 115 angeordnet. Dadurch wird eine vorteilhafte Abstützung des Rotors 102 an der Motorwelle 104 erreicht. Die Motorwelle 104 ragt von dem ersten Drehlager 114 durch den Boden 108 hindurch in den Aufnahmeraum. Durch den insbesondere fliegend gelagerten, sich im Aufnahmeraum befindlichen Abschnitt der Motorwelle 104 wird eine einfache Montage der Bremse 200 an den Elektromotor 100 ermöglicht.

Die Motorwelle 104 weist an ihrem zur ersten Seite hin weisenden Ende eine Eingriffsstruktur 104a, die in diesem Beispiel eine Innenverzahnung ist, auf, die mit einer entsprechenden Eingriffsgegenstruktur der Eingangswelle 5c des Getriebes 5, die in dem in der Figur 1 gezeigten Beispiel eine Außenverzahnung ist, eingreifen kann. Hierdurch können die Eingangswelle 5c und die Motorwelle 104 um die Drehachse D verdrehfest gefügt werden (Figur 1).

Der Motorraum des Elektromotors 100 ist zu der Bremse 200 hin mittels einer in dem Spalt zwischen Boden 108 und Motorwelle 104 angeordneten Dichtung abgedichtet. Ferner ist der Motorraum zur ersten Seite hin mit einer zwischen dem Lagergehäuse 116 und der Motorwelle 104 angeordneten Dichtung abgedichtet. Somit können der Motorraum und die darin befindlichen Komponenten vor Verschmutzung geschützt werden. Zwischen dem Deckel des Bremsgehäuses 201 und der Motorwelle 104 ist eine Dichtung angeordnet, welche das Innere der Bremse gegenüber der Umgebung abdichtet und vor Verschmutzung schützt.

An dem Deckel des Bremsgehäuses 102 ist ein Schmiermittelanschluss 117a in der Gestalt eines Schmiernippels angeordnet oder befestigt. Ein Schmiermittelkanal 117 verbindet den Schmiermittelanschluss 117a schmiermittelkommunizierend mit dem ersten Drehlager 114. Dadurch kann das erste Drehlager 114 bei Bedarf über den Schmiermittelanschluss 117a und den Schmiermittelkanal 117 mit Schmiermittel insbesondere mit Hilfe einer Fettpresse geschmiert werden. Der Schmiermittelkanal 117 weist einen ersten Kanalabschnitt 117b, der durch ein von der Drehachse D beabstandetes und zu der Drehachse D paralleles Rohr gebildet wird, auf. Das Rohr mündet mit einem Ende in eine Bohrung, die schmiermittelkommunizierend mit dem Schmiermittelanschluss 117a verbunden ist, und mit dem anderen Ende in eine Bohrung des Bodens 108, die schmiermittelkommunizierend mit einem zweiten Kanalabschnitt, der von dem Boden 108 gebildet wird, verbunden ist. Der zweite Kanalabschnitt 117c, der als senkrecht zur Drehachse D sich durch den Boden 108 erstreckende Bohrung ausgestaltet ist, führt zu dem Drehlager 114. Das Motorgehäuse 103 kann optional einen Abdeckring (nicht gezeigt) aufweisen, der mittels mehrerer Schraubenbolzen dreh- und axialfest mit dem Boden 108 oder allgemein dem zweiten Gehäusedeckel gefügt ist und den Motorraum von dem ersten Drehlager 114 insbesondere mediendicht trennt. Zwischen dem Abdeckring und dem Rotorträger 112 oder alternativ der Motorwelle 104 ist mindestens eine Dichtung angeordnet, welche den Spalt zwischen dem Abdeckring und dem Rotorträger 116, alternativ der Motorwelle 104 abdichtet, so dass das das erste Drehlager 114 schmierende Schmiermittel nicht in den Motorraum gelangen kann.

### Bezugszeichenliste

| | | | |
|---|---|---|---|
| 1 | Winde | 118 | (Kühlmittel-)Kanal |
| 2 | Windengestell | 118a | Kühlmittelzuführanschluss |
| 3 | Windentrommel | 118b | Kühlmittelabführanschluss |
| 4 | Motor-Bremse-Einheit | | |
| 5 | Getriebe | 200 | Bremse |
| 5a | erstes Gehäuse | 201 | Bremsgehäuse |
| 5b | zweites Gehäuse | 210 | erster Bremskörper (Bremslamellen) |
| 5c | Eingangswelle | 220 | zweiter Bremskörper (Bremslamellen) |
| 5d | Planetenstufe | 211 | Bremsrotor |
| | | 212 | Welle-Nabe-Verbindung |
| 100 | Elektromotor | 230 | Feder |
| 101 | Stator | 240 | Druckstück |
| 102 | Rotor | | |
| 103 | Motorgehäuse | D | Drehachse |
| 104 | Motorwelle | | |
| 104a | Eingriffsstruktur | | |
| 105 | topfförmiger Gehäuseabschnitt | | |
| 106 | erste Stirnwand | | |
| 107 | zweite Stirnwand | | |
| 108 | Boden | | |
| 109 | Seitenwand | | |
| 110 | erste Umfangswand | | |
| 111 | zweite Umfangswand | | |
| 112 | Rotorträger | | |
| 113 | Welle-Nabe-Verbindung | | |
| 114 | erstes Drehlager | | |
| 115 | zweites Drehlager | | |
| 116 | Lagergehäuse | | |
| 117 | Schmiermittelkanal | | |
| 117a | Schmiermittelanschluss | | |
| 117b | erster Kanalabschnitt | | |
| 117c | zweiter Kanalabschnitt | | |

## Patentansprüche

1. Motor-Bremse-Einheit (4) für eine Winde (1), umfassend:
a) einen Elektromotor (100), umfassend einen mit einer Motorwelle (104) verbundenen Rotor (102) und einen mit einem Gehäuse (103) verbundenen Stator (101), wobei der Rotor (102) mit der Motorwelle (104) relativ zu dem Stator (101) um eine Drehachse (D) drehbar ist,
b) eine Bremse (200), die mindestens einen ersten Bremskörper (210) und mindestens einen zweiten Bremskörper (220), der mit der Motorwelle (104) um die Drehachse (D) verdrehfest verbunden oder verbindbar ist, aufweist, wobei der mindestens eine erste Bremskörper (210) und der mindestens eine zweite Bremskörper (220) zur Erzielung einer auf Reibschluss basierenden Bremswirkung gegeneinander drückbar sind,
c) wobei das Gehäuse (103) einen topfförmigen Abschnitt (105) aufweist, in den die Bremse (200) eingesetzt oder einsetzbar ist, so dass die Bremse (200) zumindest teilweise von dem topfförmigen Abschnitt (105) umgeben ist,
**dadurch gekennzeichnet, dass**
d) der topfförmige Abschnitt (105) zumindest teilweise von dem Rotor (102) des Elektromotors (100) umgeben ist.

2. Motor-Bremse-Einheit (4) nach dem vorhergehenden Anspruch, **dadurch gekennzeichnet, dass** der topfförmige Abschnitt (105) zumindest teilweise von dem Rotor (102) und dem Stator (101) des Elektromotors (100) umgeben ist.

3. Motor-Bremse-Einheit (4) nach einem der vorhergehenden Ansprüche, **dadurch gekennzeichnet, dass** der mindestens eine erste Bremskörper (210) und/oder der mindestens eine zweite Bremskörper (220) von dem Rotor (102) und/oder dem Stator (101) umgeben ist.

4. Motor-Bremse-Einheit (4) nach einem der vorhergehenden Ansprüche, **dadurch gekennzeichnet, dass** das Gehäuse (103) des Elektromotors (100) eine erste Stirnwand (106) und eine zweite Stirnwand (107) aufweist, zwischen denen der Rotor (102) und der Stator (101) angeordnet sind, wobei sich der topfförmige Abschnitt (105) von der zweiten Stirnwand (107) zur ersten Stirnwand (106) hin erstreckt.

5. Motor-Bremse-Einheit (4) nach dem vorhergehenden Anspruch, **dadurch gekennzeichnet, dass** der Boden (108) des topfförmigen Abschnitts (105) in Bezug auf die zweite Stirnwand (107) zur ersten Stirnwand (106) hin versetzt und insbesondere eine die Drehachse (D) umgebende Seitenwand (109) des topfförmigen Abschnitts (105) zwischen dem Boden (108) und der zweiten Stirnwand (107) angeordnet ist.

6. Motor-Bremse-Einheit (4) nach dem vorhergehenden Anspruch, **dadurch gekennzeichnet, dass** sich die Motorwelle (104) durch den Boden (108) in den topfförmigen Abschnitt (105) erstreckt.

7. Motor-Bremse-Einheit (4) nach einem der vorhergehenden Ansprüche, **gekennzeichnet durch** einen Rotorträger (112), der mit um die Drehachse (D) verdrehfest mit dem Rotor (102) und mittels einer Welle-Nabe-Verbindung (113) um die Drehachse (D) verdrehfest mit der Motorwelle (104) verbunden ist, wobei der Rotorträger (112) zwischen dem Boden (108) und der ersten Stirnwand (106) angeordnet ist und/oder der Rotor (102) von dem Rotorträger (112) einseitig zu der zweiten Stirnwand (107) hin abragt.

8. Motor-Bremse-Einheit (4) nach einem der vorhergehenden Ansprüche, **dadurch gekennzeichnet, dass** die Bremse (200) einen Bremsrotor (211) aufweist, an dem der mindestens eine zweite Bremskörper (210) befestigt ist und der mittels einer, insbesondere formschlüssigen, Welle-Nabe-Verbindung (212) mit der Motorwelle (104) um die Drehachse (D) verdrehfest verbunden ist.

9. Motor-Bremse-Einheit (4) nach einem der vorhergehenden Ansprüche, **gekennzeichnet durch** ein erstes Drehlager (114), über welches sich die Motorwelle (104) drehbar an dem Boden (108) abstützt, und ein zweites Drehlager (115), über welches sich die Motorwelle (104) drehbar an der ersten Stirnwand (106) oder an einem an der ersten Stirnwand (106) befestigten Lagergehäuse (116) abstützt.

10. Motor-Bremse-Einheit (4) nach dem vorhergehenden Anspruch, **gekennzeichnet durch** einen Schmiermittelkanal (117), der einen von außen zugänglichen Schmiermittelanschluss (117a) und das erste Drehlager (114) schmiermittelkommunizierend miteinander verbindet, wobei sich ein erster Kanalabschnitt (117b) **durch** die Wand des Bremsgehäuses (103) und/oder ein zweiter Kanalabschnitt (117c) **durch** die Wand des Bodens (108) erstrecken.

11. Motor-Bremse-Einheit (4) nach einem der vorhergehenden Ansprüche, **dadurch gekennzeichnet, dass** das Motorgehäuse (103) eine erste sich um die Drehachse (D) erstreckende Umfangswand (110) und eine zweite sich um die Drehachse (D) erstreckende, die erste Umfangswand umgebende Umfangswand (111) aufweist, wobei zwischen der ersten Umfangswand (110) und der zweiten Umfangswand (111) ein sich über den Umfang erstreckender Kanal (118) gebildet ist, durch den Kühlmittel von einem Kühlmittelzuführanschluss (118a) über den Umfang des Elektromotors (100) zu einem Kühlmittelabführanschluss (118b) geleitet werden kann.

12. Motor-Bremse-Einheit (4) nach einem der vorhergehenden Ansprüche, **dadurch gekennzeichnet, dass** die Bremse (200) mindestens eine vorgespannte Feder (230) aufweist, welche über ein Druckstück (240) den mindestens einen ersten und einen zweiten Bremskörper (210, 220) für die Bremsung gegeneinander drückt, wobei das Druckstück (240) zum Lösen der ersten Bremse (200) oder zur Verringerung des Bremsmoments gegen die Kraft der vorgespannten Feder (230) elektrisch, hydraulisch oder pneumatisch bewegbar ist.

13. Winde (1), insbesondere Seilwinde, umfassend:
- ein Windengestell (2),
- eine relativ zu dem Windengestell (2) um eine Drehachse (D) drehbare Windentrommel (3),
- die Motor-Bremse-Einheit (4) nach einem der vorhergehenden Ansprüche, wobei das Gehäuse (103) des Elektromotors (100) um die Drehachse (D) verdrehfest mit dem Windengestell (2) verbunden und die Motorwelle (104) über ein Getriebe (5) kinematisch so mit der Windentrommel (3) verbunden ist, dass eine Drehung der Motorwelle (104) eine Drehung der Windentrommel (3) relativ zu dem Windengestell (2) um die Drehachse (D) bewirkt, wobei die Bremse (200) die Drehung der Motorwelle (104) und somit auch der Windentrommel (3) abbremsen oder verhindern kann, wenn die ersten und zweiten Bremskörper (210, 220) gegeneinander gedrückt werden.

14. Winde (1) nach dem vorhergehenden Anspruch, **dadurch gekennzeichnet, dass** das Getriebe (5) ein mit dem Windengestell (2) um die Drehachse (D) verdrehfest verbundenes erstes Gehäuse (5a), eine mit der Motorwelle (104) um die Drehachse (D) verdrehfest verbundene Eingangswelle (5c), die relativ zu dem ersten Gehäuse (5a) um die Drehachse (D) drehbar ist, und ein zweites Gehäuse (5b), das relativ zu dem ersten Gehäuse (5a) um die Drehachse (D) drehbar an dem ersten Gehäuse (5a) gelagert ist, aufweist, wobei das zweite Gehäuse (5b) um die Drehachse (D) verdrehfest mit der Windentrommel (3) verbunden ist.

15. Winde (1) nach dem vorhergehenden Anspruch, **dadurch gekennzeichnet, dass** kinematisch zwischen der Eingangswelle (5c) und dem zweiten Gehäuse (5b) des Getriebes (5) mindestens eine Planetenstufe (5d) angeordnet ist.

## Claims

1. A motor brake unit (4) for a winch (1), comprising:
a) an electric motor (100) comprising a rotor (102), which is connected to a motor shaft (104), and a stator (101) which is connected to a housing (103), wherein the rotor (102) can be rotated together with the motor shaft (104) relative to the stator (101) about a rotational axis (D);
b) a brake (200) which comprises at least one first brake body (210) and at least one second brake body (220) which is or can be connected, non-rotationally about the rotational axis (D), to the motor shaft (104), wherein the at least one first brake body (210) and the at least one second brake body (220) can be pressed against each other in order to achieve a braking effect based on a frictional engagement,
c) wherein the housing (103) comprises a cup-shaped section (105) into which the brake (200) is or can be inserted, such that the brake (200) is at least partially surrounded by the cup-shaped section (105),
**characterised in that**
d) the cup-shaped section (105) is at least partially surrounded by the rotor (102) of the electric motor (100).

2. The motor brake unit (4) according to the preceding claim, **characterised in that** the cup-shaped section (105) is at least partially surrounded by the rotor (102) and the stator (101) of the electric motor (100).

3. The motor brake unit (4) according to any one of the preceding claims, **characterised in that** the at least one first brake body (210) and/or the at least one second brake body (220) is surrounded by the rotor (102) and/or the stator (101).

4. The motor brake unit (4) according to any one of the preceding claims, **characterised in that** the housing (103) of the electric motor (100) comprises a first end-facing wall (106) and a second end-facing wall (107) between which the rotor (102) and the stator (101) are arranged, wherein the cup-shaped section (105) extends from the second end-facing wall (107) towards the first end-facing wall (106).

5. The motor brake unit (4) according to the preceding claim, **characterised in that** the base (108) of the cup-shaped section (105) is offset in relation to the second end-facing wall (107) towards the first end-facing wall (106), and a side wall (109) of the cup-shaped section (105) which surrounds the rotational axis (D) is in particular arranged between the base (108) and the second end-facing wall (107).

6. The motor brake unit (4) according to the preceding claim, **characterised in that** the motor shaft (104) extends through the base (108) into the cup-shaped section (105).

7. The motor brake unit (4) according to any one of the preceding claims, **characterised by** a rotor carrier (112) which is connected, non-rotationally about the rotational axis (D), to the rotor (102) and connected, non-rotationally about the rotational axis (D), to the motor shaft (104) by means of a shaft-hub connection (113), wherein the rotor carrier (112) is arranged between the base (108) and the first end-facing wall (106) and/or the rotor (102) projects from the rotor carrier (112) towards the second end-facing wall (107) on one side.

8. The motor brake unit (4) according to any one of the preceding claims, **characterised in that** the brake (200) comprises a brake rotor (211) to which the at least one second brake body (220) is fastened and which is connected, non-rotationally about the rotational axis (D), to the motor shaft (104) by means of a shaft-hub connection (212) which is in particular a positive-fit shaft-hub connection.

9. The motor brake unit (4) according to any one of the preceding claims, **characterised by** a first rotary bearing (114), via which the motor shaft (104) is rotatably supported on the base (108), and a second rotary bearing (115) via which the motor shaft (104) is rotatably supported on the first end-facing wall (106) or on a bearing housing (116) which is fastened to the first end-facing wall (106).

10. The motor brake unit (4) according to the preceding claim, **characterised by** a lubricant channel (117) which connects a lubricant port (117a), which is accessible from the outside, and the first rotary bearing (114) to each other in lubricant communication, wherein a first channel section (117b) extends through the wall of the brake housing (103) and/or a second channel section (117c) extends through the wall of the base (108).

11. The motor brake unit (4) according to any one of the preceding claims, **characterised in that** the motor housing (103) comprises a first circumferential wall (110), which extends around the rotational axis (D), and a second circumferential wall (111) which extends around the rotational axis (D) and surrounds the first circumferential wall (110), wherein a channel (118) which extends over the circumference is formed between the first circumferential wall (110) and the second circumferential wall (111), wherein coolant can be channelled through the channel (118) from a coolant supply port (118a) to a coolant drainage port (118b) via the circumference of the electric motor (100).

12. The motor brake unit (4) according to any one of the preceding claims, **characterised in that** the brake (200) comprises at least one biased spring (230) which presses the at least one first and second brake body (210, 220) against each other via a pressure piece (240) for the purpose of braking, wherein the pressure piece (240) can be moved electrically, hydraulically or pneumatically against the force of the biased spring (230) in order to release the brake (200) or reduce the braking torque.

13. A winch (1), in particular a cable winch, comprising:
- a winch frame (2);
- a winch drum (3) which can be rotated about a rotational axis (D) relative to the winch frame (2);
- the motor brake unit (4) according to any one of the preceding claims, wherein the housing (103) of the electric motor (100) is connected, non-rotationally about the rotational axis (D), to the winch frame (2), and the motor shaft (104) is kinematically connected to the winch drum (3) via a gearing (5), such that rotating the motor shaft (104) generates a rotation of the winch drum (3) relative to the winch frame (2) about the rotational axis (D), wherein the brake (200) can slow or prevent the rotation of the motor shaft (104) and therefore also the rotation of the winch drum (3) when the first and second brake bodies (210, 220) are pressed against each other.

14. The winch (1) according to the preceding claim, **characterised in that** the gearing (5) comprises: a first housing (5a) which is connected, non-rotationally about the rotational axis (D), to the winch frame (2); an input shaft (5c) which is connected, non-rotationally about the rotational axis (D), to the motor shaft (104) and which can be rotated relative to the first housing (5a) about the rotational axis (D); and a second housing (5b) which is mounted on the first housing (5a) such that it can be rotated relative to the first housing (5a) about the rotational axis (D), wherein the second housing (5b) is connected, non-rotationally about the rotational axis (D), to the winch drum (3).

15. The winch (1) according to the preceding claim, **characterised in that** at least one planetary stage (5d) is kinematically arranged between the input shaft (5c) and the second housing (5b) of the gearing (5).

## Revendications

1. Unité frein-moteur (4) pour un treuil (1), comprenant :
a) un moteur électrique (100) comprenant un rotor (102) relié à un arbre moteur (104) et un stator (101) relié à un carter (103), le rotor (102) pouvant tourner autour d'un axe de rotation (D) avec l'arbre moteur (104) par rapport au stator (101),
b) un frein (200) qui présente au moins un premier corps de frein (210) et au moins un deuxième corps de frein (220) qui est ou peut être solidarisé fixe en rotation autour de l'axe de rotation (D) avec l'arbre moteur (104), dans lequel le au moins un premier corps de frein (210) et le au moins un deuxième corps de frein (220) peuvant être pressés l'un contre l'autre pour obtenir un effet de freinage basé sur la friction,
c) le boîtier (103) présentant une partie en forme de pot (105), dans laquelle le frein (200) est ou peut être inséré, de telle sorte que le frein (200) soit entouré, du moins en partie, par la partie en forme de pot (105),
**caractérisée en ce**
d) **que** la partie en forme de pot (105) est entourée, du moins en partie, par le rotor (102) du moteur électrique (100).

2. Unité frein-moteur (4) selon la revendication précédente, **caractérisée en ce que** la partie en forme de pot (105) est entourée, du moins en partie, par le rotor (102) et le stator (101) du moteur électrique (100).

3. Unité frein-moteur (4) selon l'une des revendications précédentes, **caractérisée en ce que** le au moins un premier corps de frein (210) et/ou le au moins un deuxième corps de frein (220) sont entourés par le rotor (102) et/ou le stator (101).

4. Unité frein-moteur (4) selon l'une des revendications précédentes, **caractérisée en ce que** le boîtier (103) du moteur électrique (100) présente une première face d'extrémité (106) et une deuxième face d'extrémité (107) entre lesquelles sont disposés le rotor (102) et le stator (101), la partie en forme de pot (105) s'étendant de la deuxième paroi d'extrémité (107) vers la première paroi d'extrémité (106).

5. Unité frein-moteur (4) selon la revendication précédente, **caractérisée en ce que** le fond (108) de la partie en forme de pot (105) est décalé par rapport à la deuxième paroi d'extrémité (107) vers la première paroi d'extrémité (106) et, en particulier, une paroi latérale (109) de la partie en forme de pot (105), entourant l'axe de rotation (D), est disposée entre le fond (108) et la deuxième paroi d'extrémité (107).

6. Unité frein-moteur (4) selon la revendication précédente, **caractérisée en ce que** l'arbre moteur (104) s'étend au-travers du fond (108) dans la partie en forme de pot (105).

7. Unité frein-moteur (4) selon l'une des revendications précédentes, **caractérisée par** un support de rotor (112) qui est solidarisé fixe en rotation autour de l'axe de rotation (D) avec le rotor (102) et, à l'aide d'une fixation moyeu-arbre (113), fixe en rotation autour de l'axe de rotation (D) avec l'arbre moteur (104), le support du rotor (112) étant disposé entre le fond (108) et la première paroi d'extrémité (106) et/ou le rotor (102) débordant d'un côté du support de rotor (112) vers la deuxième paroi d'extrémité (107).

8. Unité frein-moteur (4) selon l'une des revendications précédentes, **caractérisée en ce que** le frein (200) présente un rotor de frein (211) sur lequel est fixé au moins un deuxième corps de frein (210) et qui est solidarisé fixe en rotation autour de l'axe de rotation (D) avec l'arbre moteur (104) à l'aide d'une fixation moyeu-arbre (212), en particulier par coopération de forme.

9. Unité frein-moteur (4) selon l'une des revendications précédentes, **caractérisée par** un premier palier rotatif (114) sur lequel s'appuie l'arbre moteur (104) à rotation sur le fond (108), et un deuxième palier rotatif (115) sur lequel s'appuie l'arbre moteur (104) à rotation sur la première paroi d'extrémité (106) ou sur un boîtier de logement (116) fixé sur la première paroi d'extrémité (106).

10. Unité frein-moteur (4) selon la revendication précédente, **caractérisée par** un canal de lubrifiant (117) qui relie entre eux un raccord de lubrifiant (117a) accessible par l'extérieur et le premier palier à rotation (114) en faisant communiquer le lubrifiant, dans laquelle s'étendent une première section de canal (117b) par la paroi du carter de frein (103) et/ou une deuxième section de canal (117c) par la paroi du fond (108).

11. Unité frein-moteur (4) selon l'une des revendications précédentes, **caractérisée en ce que** le carter du moteur (103) présente une première paroi périphérique (110) s'étendant autour de l'axe de rotation (D) et une deuxième paroi périphérique (111) s'étendant autour de l'axe de rotation (D) et entourant la première paroi périphérique (111), dans laquelle un canal (118) s'étendant sur toute la périphérie est formé entre la première paroi périphérique (110) et la deuxième paroi périphérique (111), par lequel l'agent de refroidissement peut être acheminé d'un raccord d'apport d'agent de refroidissement (118a) sur la périphérie du moteur électrique (100) vers un raccord d'évacuation d'agent de refroidissement (118b).

12. Unité frein-moteur (4) selon l'une des revendications précédentes, **caractérisée en ce que** le frein (200) présente au moins un ressort (230) précontraint qui presse l'un contre l'autre, par l'intermédiaire d'une pièce de pression (240), au moins un premier et un deuxième corps de frein (210, 220) pour le freinage, la pièce de pression (240) pouvant être déplacée électriquement, hydrauliquement ou pneumatiquement pour desserrer le premier frein (200) ou pour réduire le couple de freinage contre la force du ressort (230) précontraint.

13. Treuil (1), en particulier treuil à câble, comprenant :
- un châssis de treuil (2),
- un tambour de treuil (3) rotatif par rapport au châssis de treuil (2) autour d'un axe de rotation (D),
- l'unité frein-moteur (4) selon l'une des revendications précédentes, le carter (103) du moteur électrique (100) étant solidarisé fixe en rotation autour de l'axe de rotation (D) avec le châssis du treuil (2) et l'arbre moteur (104) étant, par l'intermédiaire d'une transmission (5), fixé cinématiquement avec le tambour du treuil (3) de telle sorte qu'une rotation de l'arbre moteur (104) entraîne une rotation du tambour du treuil (3) par rapport au châssis du treuil (2) autour de l'axe de rotation (D), le frein (200) pouvant freiner ou empêcher la rotation de l'arbre moteur (104) et, dès lors, du tambour du treuil (3) lorsque les premier et deuxième corps de frein (210, 220) sont pressés l'un contre l'autre.

14. Treuil (1) selon la revendication précédente, **caractérisé en ce que** la transmission (5) présente un premier boîtier (5a) solidarisé fixe en rotation autour de l'axe de rotation (D) avec le châssis du treuil, un arbre d'entrée (5c) solidarisé fixe en rotation autour de l'axe de rotation (D) avec l'arbre moteur (104), qui peut tourner autour de l'axe de rotation (D) par rapport au premier boîtier (5a) et un deuxième boîtier (5b) qui est logé à rotation sur le premier boîtier (5a) autour de l'axe de rotation (D) par rapport au premier boîtier (5a), le deuxième boîtier (5b) étant solidarisé fixe en rotation autour de l'axe de rotation (D) avec le tambour de treuil (3).

15. Treuil (1) selon la revendication précédente, **caractérisé en ce qu'**un étage planétaire (5d) est disposé cinématiquement entre l'arbre d'entrée (5c) et le deuxième boîtier (5b) de la transmission (5).
